# FASCICULE DE BREVET EUROPEEN

(11) **EP 1 819 558 B1**
(45) Date de publication et mention de la délivrance du brevet: **06.04.2011**
(21) Numéro de dépôt: 05804947.9
(22) Date de dépôt: 25.11.2005
(51) Int. Cl.: B60S 1/04

(54) **DISPOSITIF AMORTISSEUR DE VIBRATIONS COMPORTANT UNE COLLERETTE APTE A VENIR EN BUTEE CONTRE UN BLOC AMORTISSEUR**
SCHWINGUNGSDÄMPFUNGSVORRICHTUNG MIT EINEM BUND, DER IN ANLAGE AN EINE DÄMPFUNGSEINHEIT GEBRACHT WERDEN KANN
VIBRATION DAMPING DEVICE COMPRISING A COLLAR ABUTABLE ON A DAMPING UNIT

(30) Priorité: 30.11.2004 FR 0412704
(43) Date de publication de la demande: 22.08.2007
(73) Titulaire: VALEO SYSTEMES D'ESSUYAGE, 78321 La Verriere (FR)
(72) Inventeur: JOURDAIN, Stéphane, 78310 Maurepas (FR); GODARD, Olivier, 86220 Les Ormes (FR); VALLIERE, Jérôme, 86220 Les Ormes (FR); MORIN, Pascal, F-86100 Châtellerault (FR)
(86) Numéro de dépôt international: PCT/EP2005/012630
(87) Numéro de publication internationale: WO 2006/058665

(56) Documents cités:
- WO-A-00/53464
- FR-A- 2 750 099
- FR-A- 2 853 606
- FR-A- 2 855 478

## Description

L'invention propose un dispositif amortisseur de vibrations qui relie la platine de support d'un mécanisme d'essuie-glace à un élément de structure de caisse d'un véhicule automobile. Le document FR-A-2 853 606 décrit un dispositif selon le préambule de la revendication 1.

L'invention propose plus particulièrement un dispositif amortisseur pour le montage d'une platine de support d'un mécanisme d'essuie-glace sur un élément de structure,
qui comporte un bloc amortisseur cylindrique d'axe principal vertical percé d'un alésage central pour le passage d'un organe de montage du bloc amortisseur sur l'élément de structure,
dans lequel le bloc amortisseur comporte un collet radial supérieur et un collet radial inférieur cylindriques, dont chacun est reçu d'un côté d'une plaque horizontale de la platine et qui délimitent entre eux une gorge radiale interne dans laquelle est reçu le bord d'un orifice complémentaire de la plaque pour assurer le maintien du bloc amortisseur par rapport à la platine selon la direction axiale,
et dans lequel la platine comporte au moins une collerette verticale cylindrique qui est portée par la plaque horizontale et qui s'étend en regard de la face cylindrique externe d'un collet associé.

Un tel dispositif amortisseur est utilisé pour réduire les vibrations produites par le mécanisme d'essuie-glace qui sont transmises entre la caisse du véhicule et la platine du système d'essuyage, qui porte principalement un groupe motoréducteur d'entraînement du système d'essuyage.

Les dispositifs amortisseurs conventionnels sont particulièrement adaptés pour l'amortissement des vibrations pour lesquelles l'amplitude de déplacement de la platine par rapport à la caisse du véhicule est relativement réduite.

Cependant, ces amortisseurs ne sont pas adaptés pour amortir des vibrations ayant une amplitude de déplacement plus importante.

Lorsque le mécanisme d'essuyage est soumis à ces vibrations d'amplitude plus importante, il se déplace par rapport à la caisse du véhicule, et par rapport au panneau vitré à essuyer, et la zone d'essuyage est par conséquent décalée par rapport à la zone optimale d'essuyage.

Le dispositif d'essuie-glace ne peut donc pas rétablir de manière correcte la visibilité pour le conducteur.

L'invention a pour but de proposer un dispositif amortisseur permettant d'amortir les vibrations de faible amplitude de manière conventionnelle, et qui permet aussi d'amortir les vibrations d'amplitude plus importante.

Dans ce but, l'invention propose un dispositif amortisseur selon la revendication 1.

Selon d'autres caractéristiques de l'invention :
- l'élément de butée est porté par la face cylindrique interne concave de la collerette et s'étend à distance de la face cylindrique externe du collet ;
- l'élément de butée est porté par la face cylindrique externe convexe du collet et s'étend à distance de la face cylindrique interne concave de la collerette ;
- la face cylindrique externe convexe du collet et/ou la face cylindrique interne concave de la collerette porte une pluralité d'éléments de butée qui sont répartis angulairement autour de l'axe principal.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective d'un dispositif amortisseur conforme à l'art antérieur ;
- la figure 2 est une vue de dessus du dispositif amortisseur représenté à la figure 1
- la figure 3 est une vue similaire à celle de la figure 2, représentant un dispositif amortisseur qui porte un élément de butée conforme à l'invention ;
- la figure 4 est une vue de dessous d'un dispositif amortisseur conforme à l'art antérieur ;
- la figure 5 est une vue similaire à celle de la figure 4, dans laquelle le collet inférieur est en contact avec la collerette.

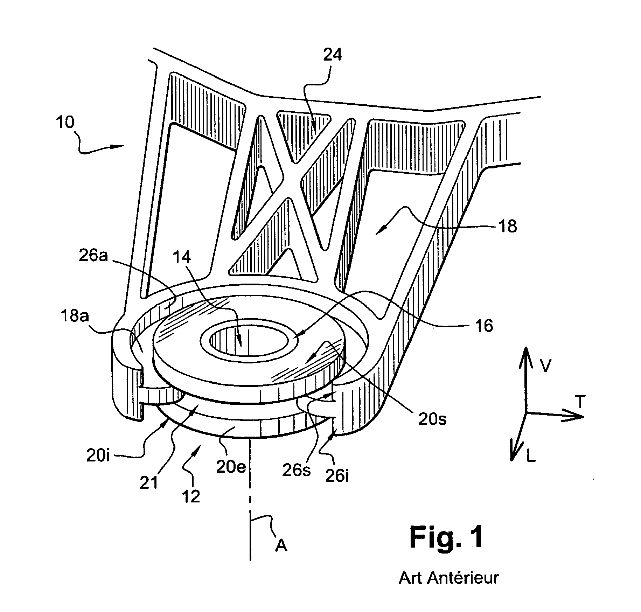

Pour la description de l'invention, on adoptera à titre non limitatif les orientations verticale, longitudinale et transversale selon le repère V, L, T indiqué à la figure 1.

Dans la description qui va suivre, des éléments identiques, similaires ou analogues seront désignés par les mêmes chiffres de référence.

On a représenté aux figures un dispositif amortisseur pour le montage d'une platine 10 de support d'un mécanisme d'essuie-glace (non représenté) sur un élément de structure de caisse d'un véhicule automobile (non représenté) par l'intermédiaire d'un bloc amortisseur de vibrations 12.

Le bloc amortisseur de vibrations 12, que l'on désignera par la suite "amortisseur", est de forme générale cylindrique d'axe principal A vertical, il comporte un alésage central cylindrique 14, coaxial à l'axe principal A, qui est traversé par un organe 16 complémentaire de montage de l'amortisseur 12 sur l'élément de structure de caisse du véhicule.

La platine 10 comporte une plaque horizontale 18 à une extrémité libre 18a de laquelle l'amortisseur 12 est monté de manière à réaliser le maintien de la plaque 18 sur l'amortisseur 12.

A cet effet, l'amortisseur 12 comporte un collet radial supérieur 20s cylindrique et un collet radial inférieur 20i cylindrique qui sont reçus verticalement de part et d'autre de l'extrémité 18a de la plaque 18, de manière qu'ils délimitent entre eux une gorge 21 dans laquelle est reçu le bord 22 d'un orifice complémentaire de l'extrémité 18a de la plaque 18.

La plaque horizontale 18 comporte aussi un ensemble de nervures 24, 26s, 26i de rigidification permettant de limiter les déformations verticales de la plaque 18, parmi lesquelles une nervure, ou collerette supérieure 26s est associée au collet supérieur 20s et une collerette inférieure 26i est associée au collet inférieur 20i.

Dans la description qui va suivre, on fera référence à une seule collerette 26s, 26i. Il sera compris que cette référence à une seule collerette s'applique de manière identique à la collerette supérieure 26s et à la collerette inférieure 26i.

La face cylindrique interne concave 26a de la collerette 26s, 26i s'étend verticalement en vis-à-vis de la face cylindrique externe convexe 20e du collet 20s, 20i associé.

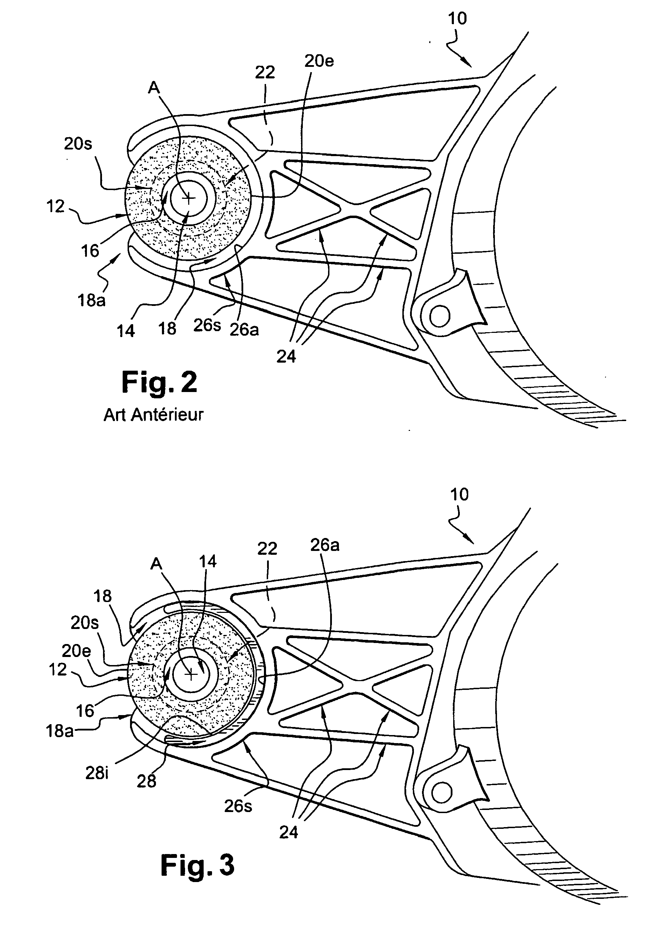

Selon un premier mode de réalisation représenté aux figures 2 et 3, l'amortisseur 12 est engagé radialement dans l'orifice de la plaque 18, par rapport à l'axe principal A.

Pour cela, l'orifice de la plaque 18 débouche à l'extrémité libre 18e de la plaque 18, et la collerette 26s, 26i forme une boucle globalement coaxiale à l'axe principal A de l'amortisseur 12 qui est ouverte au niveau de l'ouverture de l'orifice de la plaque 18.

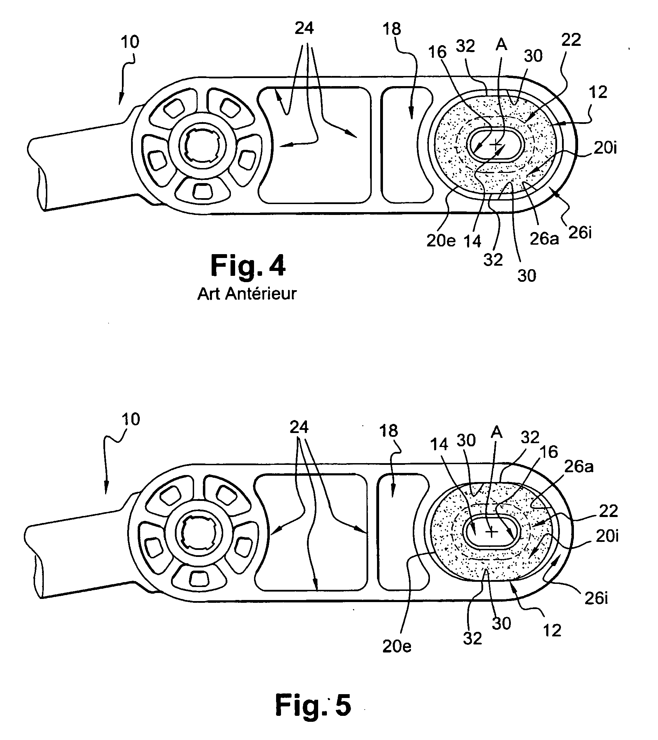

Selon un deuxième mode de réalisation représenté aux figures 4 et 5, l'amortisseur 12 est engagé axialement dans l'orifice de la plaque 18, la collerette 26s, 26i forme alors une boucle fermée périphérique au collet 20s, 20i associé.

Selon les modes de réalisation conformes à l'art antérieur, que l'on a représentés aux figures 2 et 4, la face cylindrique interne concave 26a de la collerette 26s, 26i est située radialement à distance de la face cylindrique externe convexe 20e du collet 20s, 20i associé, par rapport à l'axe principal A.

Comme on l'a dit plus haut, de tels montages sont particulièrement adaptés pour amortir les vibrations correspondant à un déplacement de la platine 10 par rapport à l'élément de structure de caisse du véhicule dont l'amplitude est relativement faible.

Conformément à l'invention, et comme on l'a représenté aux figures 3 et 5, le collet supérieur 20s et/ou le collet inférieur 20i est apte à venir en butée contre la collerette 26s, 26i associée lors d'un déplacement horizontal de la platine 10 par rapport à l'élément de structure de caisse, dont l'amplitude est relativement importante, c'est-à-dire que la face cylindrique externe convexe 20e du collet 20s, 20i est apte à venir en butée avec la face cylindrique interne concave 26a en vis-à-vis de la collerette 26s, 26i.

Lorsque la face cylindrique interne concave 26a de la collerette 26s, 26i est en butée contre la face cylindrique externe convexe 20e du collet 20s, 20i associé, le collet 20s, 20i est apte à se déformer élastiquement pour réaliser l'amortissement en déplacement de la collerette 26s, 26i, et par conséquent de la platine 10, par rapport à l'élément de structure de caisse.

Selon un premier aspect de l'invention représenté à la figure 3, l'agencement comporte un élément de butée 28 qui est agencé entre la face cylindrique interne concave 26a de la collerette 26s, 26i et la face cylindrique externe convexe 20e du collet 20s, 20i associé.

L'élément de butée 28 réduit ainsi le jeu radial entre la face cylindrique interne concave 26a de la collerette 26s, 26i et la face cylindrique externe convexe 20e en vis-à-vis du collet 20s, 20i associé, par rapport au mode de réalisation selon l'art antérieur, ce qui permet à la collerette 26s, 26i de venir quasi immédiatement en butée contre le collet 20s, 20i associé.

Ici, l'élément de butée 28 est porté par la face cylindrique interne concave 26a de la collerette 26s, 26i, de manière qu'une face cylindrique interne 28a de l'élément de butée 28 est apte à venir en contact avec la face cylindrique externe convexe 20e du collet 20s, 20i en vis-à-vis, lorsque la face cylindrique interne concave 26a de la collerette 26s, 26i est en butée contre la face cylindrique externe convexe 20e du collet 20s, 20i.

Selon une variante de réalisation de l'invention (non représentée), l'élément de butée 28 est porté par la face cylindrique externe convexe 20e du collet 20s, 20i associé, de manière qu'une face cylindrique externe convexe de l'élément de butée 28, qui s'étend en vis-à-vis de la face cylindrique interne concave 26a de la collerette 26s, 26i, est apte à venir en contact avec la face cylindrique interne concave 26a de la collerette 26s, 26i, lorsque la collerette 26s, 26i est en butée contre le collet 20s, 20i.

L'élément de butée 28 est un élément rapporté qui est monté sur la face cylindrique interne concave 26a de la collerette 26s, 26i ou sur la face cylindrique externe convexe 20e du collet 20s, 20i, et qui est fixé sur cette face concave 26a, convexe 20e par tout moyen connu, par exemple par collage ou par surmoulage.

De plus, selon le mode de réalisation représenté à la figure 3, l'élément de butée 28 forme un arc de cercle centré sur l'axe principal A de l'amortisseur 12.

La longueur de cet arc de cercle, ainsi que sa position angulaire autour de l'axe principal A définissent les directions horizontales selon lesquelles la collerette 26s, 26i est apte à venir en butée contre le collet 20s, 20i associé.

Selon une variante de réalisation de l'invention, la face cylindrique interne concave 26a de la collerette 26s, 26i ou la face cylindrique externe convexe 20e du collet 20s, 20i associé porte une pluralité d'éléments de butée 28 qui sont répartis angulairement autour de l'axe principal A de l'amortisseur 12, et dont la longueur de l'arc de cercle formé par chaque élément de butée 28 est définie en fonction des directions horizontales selon lesquelles la collerette 26s, 26i est apte à venir en butée contre le collet 20s, 20i associé.

Selon une autre variante de réalisation de l'invention, l'élément de butée 28 est conformé de manière qu'il est simultanément en contact avec les faces en vis-à-vis convexe 20e du collet 20s, 20i et concave 26a de la collerette 26s, 26i, respectivement.

Selon un autre mode de réalisation de l'invention représenté à la figure 5, la collerette 26s, 26i et le collet 20s, 20i associé sont conformés de manière que la face cylindrique interne concave 26a de la collerette 26s, 26i est en appui au moins en partie contre la face cylindrique externe convexe 20e du collet 20s, 20i associé.

Ainsi, l'amortisseur 12 réalise immédiatement l'amortissement en déplacement de la platine 10 par rapport à l'élément de structure de caisse.

Ici, la face cylindrique interne concave 26a de la collerette 26s, 26i et la face cylindrique externe convexe 20e du collet 20s, 20i associé sont globalement de forme oblongue, de manière qu'elles comportent chacune deux portions planes longitudinales verticales 30, 32, respectivement, qui sont diamétralement opposées par rapport à l'axe principal A de l'amortisseur 12.

Conformément à ce mode de réalisation de l'invention, chaque portion plane 30 de la face cylindrique interne concave 26a de la collerette 26s, 26i est en contact avec la portion plane 32 en vis-à-vis de la face cylindrique externe convexe 20e du collet 20s, 20i associé.

Cependant, il sera compris que l'invention n'est pas limitée à ce mode de réalisation, et que la face cylindrique interne concave 26a de la collerette 26s, 26i et la face cylindrique externe convexe 20e du collet 20s, 20i associé peuvent aussi être en contact l'une avec l'autre au niveau de leurs autres portions non planes, ou bien être en totalité en contact l'une avec l'autre.

De plus, selon un premier mode de réalisation de cet aspect de l'invention, pour lequel la face cylindrique interne concave 26a de la collerette 26s, 26i est en contact avec la face cylindrique externe convexe 20e du collet 20s, 20i associé, le collet 20s, 20i est identique à celui défini selon le mode de réalisation conforme à l'art antérieur, et seule la collerette 26s, 26i est différente de celle définie selon le mode de réalisation conforme à l'art antérieur.

Selon un deuxième mode de réalisation de cet aspect de l'invention (non représenté) pour lequel la face cylindrique interne concave 26a de la collerette 26s, 26i est en contact avec la face cylindrique externe convexe 20e du collet 20s, 20i associé, la collerette 26s, 26i est identique à celle définie selon le mode de réalisation conforme à l'art antérieur, et seul le collet 20s, 20i associé est différent de celui défini selon le mode de réalisation conforme à l'art antérieur.

Cela permet ainsi d'utiliser des éléments standard pour mettre en oeuvre l'invention.

Cependant, il sera compris que l'invention n'est pas limitée à ces modes de réalisation de l'invention, et que la collerette 26s, 26i et le collet 20s, 20i associé peuvent avoir une forme et/ou des dimensions différentes de celles définies selon l'art antérieur sans sortir du domaine de l'invention.

La description de l'invention vient d'être faite en rapport à des collets 20s, 20i et des collerettes 26s, 26i qui sont globalement de forme circulaire (figures 2 et 3) ou oblongue (figures 4 et 5). Il sera compris que l'invention n'est pas limitée à ces modes de réalisation, et que les collets 20s, 20i et les collerettes 26s, 26i peuvent avoir une forme différente, par exemple ovale ou ovoïde, sans sortir du domaine de l'invention.

Il en est de même en ce qui concerne la gorge radiale interne 21 et le bord 22 de l'orifice complémentaire de la plaque 18 qui sont globalement de forme circulaire (figures 2 et 3) ou oblongue (figures 4 et 5), et peuvent avoir une forme différente, par exemple ovale ou ovoïde, sans sortir du domaine de l'invention.

De plus, le dispositif amortisseur conforme à l'invention a été décrit comme comportant une collerette supérieure 26s et une collerette inférieure 26i. Cependant, il sera compris que l'invention n'est pas limitée à ce mode de réalisation, et que le dispositif amortisseur peut comporter une seule collerette supérieure 26s ou inférieure 26i, sans sortir du domaine de l'invention.

## Revendications

1. Dispositif amortisseur pour le montage d'une platine de support (10) d'un mécanisme d'essuie-glace sur un élément de structure,
qui comporte un bloc amortisseur (12) cylindrique d'axe principal (A) vertical percé d'un alésage (14) central pour le passage d'un organe de montage (16) du bloc amortisseur (12) sur l'élément de structure,
dans lequel le bloc amortisseur (12) comporte un collet radial supérieur (20s) et un collet radial inférieur (20i) cylindriques, dont chacun est reçu d'un côté d'une plaque horizontale (18) de la platine et qui délimitent entre eux une gorge radiale interne (21) dans laquelle est reçu le bord (22) d'un orifice complémentaire de la plaque (18) pour assurer le maintien du bloc amortisseur (12) par rapport à la platine (10) selon la direction axiale,
dans lequel la platine (10) comporte au moins une collerette (26s, 26i) verticale cylindrique qui est portée par la plaque horizontale (18) et qui s'étend en regard de la face cylindrique externe (20e) d'un collet (20s, 20i) associé, et
la collerette (26s, 26i) comportant une face cylindrique interne (26a) concave qui vient radialement en butée avec une face cylindrique externe (20e) convexe du collet (20s, 20i), selon au moins une direction globalement horizontale,
**caractérisé en ce qu'**il comporte au moins un élément de butée (28) agencé entre la face cylindrique interne (26a) concave de la collerette (26s, 26i) et la face cylindrique externe (20e) du collet (20s, 20i) qui est apte à venir en contact simultanément avec la face cylindrique interne (26a) concave de la collerette (26s, 26i) et la face cylindrique externe (20e) du collet (20s, 20i).

2. Dispositif selon la revendication précédente, **caractérisé en ce que** l'élément de butée (28) est porté par la face cylindrique interne (26a) concave de la collerette (26s, 26i) et s'étend à distance de la face cylindrique externe (20e) du collet (20s, 20i).

3. Dispositif selon la revendication 1, **caractérisé en ce que** l'élément de butée (28) est porté par la face cylindrique externe (20e) du collet (20s, 20i) et s'étend à distance de la face cylindrique interne (26a) concave de la collerette (26s, 26i).

4. Dispositif selon l'une quelconque des revendications 1 à 3, **caractérisé en ce que** la face cylindrique externe convexe (20e) du collet (20s, 20i) et/ou la face cylindrique concave interne (26a) de la collerette (26s, 26i) porte une pluralité d'éléments de butée (28) qui sont répartis angulairement autour de l'axe principal (A).

## Claims

1. A damping device for mounting a bracket (10) supporting a wiper mechanism on a structural element,
which includes a cylindrical damping block (12) having a vertical main axis (A) provided with a central bore (14) for the passage of a member (16) for mounting the damping block (12) on the structural element,
wherein the damping block (12) includes a cylindrical upper radial collar (20s) and a cylindrical lower radial collar (20i), each of which is accommodated on one site of a horizontal plate (18) of the bracket and which define, therebetween, an inner radial groove (21) wherein the edge (22) of a matching hole of the plate (18) is accommodated to hold the damping block (12) with respect to the bracket (10) in the axial direction,
wherein the bracket (10) includes at least a vertical cylindrical flange (26s, 26i) which is carried by the horizontal plate (18) and which extends opposite the outer cylindrical face (20e) of an associated collar (20s, 20i), and
the flange (26s, 26i) including a concave inner cylindrical face (26a) which radially abuts a convex outer cylindrical face (20e) of the collar (20s, 20i), in a substantially horizontal direction,
**characterized in that** it includes at least one stop element (28) arranged between the concave inner cylindrical face (26a) of the flange (26s, 26i) and the convex outer cylindrical face (20e) of the collar (20s, 20i) which is able to simultaneously contact the concave inner cylindrical face (26a) of the flange (26s, 26i) and the outer cylindrical face (20e) of the collar (20s, 20i).

2. A device according to the previous claim, **characterised in that** the stop element (28) is carried by the inner cylindrical face (26a) of the flange (26s, 26i) and extends away from the convex outer cylindrical face (20e) of the collar (20s, 20i).

3. A device according to claim 1, **characterized in that** the stop element (28) is carried by the outer cylindrical face (20e) of the collar (20s, 20i) and extends away from the concave inner cylindrical face (26a) of the flange (26s, 26i).

4. A device according to any one of claims 1 to 3, **characterised in that** the convex outer cylindrical face (20e) of the collar (20s, 20i) and/or the concave inner cylindrical face (26a) of the flange (26s, 26i) carries a plurality of stop elements (28) which are angularly distributed about the main axis (A).

## Patentansprüche

1. Dämpfervorrichtung für die Montage einer Stützplatine (10) eines Wischermechanismus auf einem Strukturelement,
die einen zylinderförmigen Dämpferblock (12) mit senkrechter Hauptachse (A) mit einer Zentralbohrung (14) für den Durchgang eines Montageorgans (16) des Dämpferblocks (12) auf dem Strukturelement umfasst,
in der der Dämpferblock (12) ein radiales oberes Zapfenlager (20s) und ein radiales unteres Zapfenlager (20i), beide zylinderförmig, umfasst, von denen jedes auf einer Seite von einer horizontalen Platte (18) der Platine aufgenommen wird, und die untereinander eine radiale innere Kehle (21) abgrenzen, in der die Kante (22) einer ergänzenden Öffnung der Platte (18) aufgenommen wird, um die Halterung des Dämpferblocks (12) gegenüber der Platine (10) in axialer Richtung zu gewährleisten,
in der die Platine (10) zumindest einen senkrechten zylinderförmigen Kragen (26s, 26i) umfasst, der von der horizontalen Platte (18) getragen wird und der sich gegenüber der zylinderförmigen äußeren Seite (20e) eines zugehörigen Zapfenlagers (20s, 20i) erstreckt,
wobei der Kragen (26s, 26i) eine konkave innere zylinderförmige Fläche (26a) umfasst, die radial an eine konvexe äußere zylinderförmige Fläche (20e) des Zapfenlagers (20s, 20i) in zumindest einer insgesamt horizontalen Richtung anstösst,
**dadurch gekennzeichnet, dass** sie zumindest ein Anschlagelement (28) umfasst, das zwischen der konkaven inneren zylinderförmigen Fläche (26a) des Kragens (26s, 26i) und der konvexen äußeren zylinderförmigen Fläche (20e) des Zapfenlagers (20s, 20i) gestaltet ist, die fähig ist, in Kontakt gleichzeitig mit der konkaven inneren zylinderförmigen Fläche (26a) des Kragens (26s, 26i) und der konvexen äußeren zylinderförmigen Fläche (20e) des Zapfenlagers (20s, 20i) zu kommen.

2. Vorrichtung nach vorstehendem Anspruch, **dadurch gekennzeichnet, dass** das Anschlagelement (28) von der konkaven inneren zylinderförmigen Fläche (26a) des Kragens (26s, 26i) getragen wird und sich im Abstand von der konvexen äußeren zylinderförmigen Fläche (20e) des Zapfenlagers (20s, 20i) erstreckt.

3. Vorrichtung nach Anspruch 1, **dadurch gekennzeichnet, dass** das Anschlagelement (28) von der konvexen äußeren zylinderförmigen Fläche (20e) des Zapfenlagers (20s, 20i) getragen wird und sich im Abstand von der konkaven inneren zylinderförmigen Fläche (26a) des Kragens (26s, 26i) erstreckt.

4. Vorrichtung nach einem beliebigen der vorstehenden Ansprüche 1 bis 3, **dadurch gekennzeichnet, dass** die konvexe äußere zylinderförmige Fläche (20e) des Zapfenlagers (20s, 20i) und/oder die konkave innere zylinderförmige Fläche (26a) des Kragens (26s, 26i) eine Mehrzahl Anschlagelemente (28) trägt, die winkelig um die Hauptachse (A) herum verteilt sind.
